Europäisches Patentamt

European Patent Office

Office européen des brevets

(19)

(11) Numéro de publication : **0 111 435 B1**

(12)

# FASCICULE DE BREVET EUROPÉEN

(45) Date de publication du fascicule du brevet :
09.07.86

(51) Int. Cl.⁴ : **G 21 C 7/18**

(21) Numéro de dépôt : 83402339.2

(22) Date de dépôt : 05.12.83

(54) **Dispositif de commande de deux grappes de crayons de réglage déplaçables verticalement dans un même assemblage combustible du cœur d'un réacteur nucléaire.**

(30) Priorité : 08.12.82 FR 8220543

(43) Date de publication de la demande :
20.06.84 Bulletin 84/25

(45) Mention de la délivrance du brevet :
09.07.86 Bulletin 86/28

(84) Etats contractants désignés :
AT BE CH DE GB IT LI SE

(56) Documents cités :
EP-A- 0 026 142
FR-A- 1 454 432
FR-A- 1 475 017
FR-A- 2 106 373
FR-A- 2 320 616

(73) Titulaire : **Framatome**
**Tour Fiat 1 place de la Coupole**
**F-92400 Courbevoie (FR)**

(72) Inventeur : **Millot, Jean-Paul**
**1 allée des Roitelets**
**F-78310 Elancourt (FR)**
Inventeur : **Desfontaines, Guy**
**18 rue Jean Jaurès**
**F-92800 Puteaux (FR)**
Inventeur : **Babin, Michel**
**148 Avenue Jean-Jaurès**
**F-93500 Pantin (FR)**

(74) Mandataire : **Fort, Jacques**
**CABINET PLASSERAUD 84, rue d'Amsterdam**
**F-75009 Paris (FR)**

## Description

L'invention concerne un dispositif de commande de deux grappes de crayons de réglage déplaçables verticalement dans un même assemblage combustible du cœur d'un réacteur nucléaire.

Pour améliorer les performances des réacteurs nucléaires à eau sous pression, en ce qui concerne l'utilisation du combustible, on a proposé des procédés de conduite de ces réacteurs faisant intervenir une variation du spectre d'énergie des neutrons dans le cœur du réacteur, au cours du cycle de fonctionnement de celui-ci. Par exemple, le procédé décrit dans la demande de brevet EP-A1-0 108 019 déposée par la Société FRAMATOME prévoit, pendant la première partie du cycle de fonctionnement du réacteur, l'introduction dans le cœur de grappes de crayons en matériau absorbant les neutrons. On produit ainsi un durcissement du spectre des neutrons à la fois par diminution du volume de modérateur dans le cœur et par absorption des neutrons de faible énergie. Dans une seconde partie du cycle de fonctionnement du réacteur, on extrait les grappes de crayons absorbants du cœur du réacteur et l'on consomme le matériau fissile formé au cours de la première phase. De préférence, les crayons sont en un matériau fertile susceptible de se transformer en matière fissile sous l'effet du bombardement neutronique.

Dans la demande de brevet EP-A1-0 108 020 est décrit un réacteur nucléaire à rendement amélioré utilisant en particulier un ensemble de grappes de crayons en matériau fertile pour faire varier le spectre de neutrons au cours du cycle de fonctionnement du réacteur.

Dans un tel réacteur, on utilise conjointement des barres de commande constituées par des grappes de crayons absorbant les neutrons qu'on peut insérer plus ou moins dans les assemblages constituant le cœur du réacteur pour le pilotage de celui-ci et des grappes de crayons fertiles qui sont totalement insérées dans les assemblages combustibles constituant le cœur du réacteur pendant la première partie du cycle de fonctionnement de celui-ci. En particulier, les grappes de crayons absorbants assurant le pilotage du réacteur nucléaire et les grappes de crayons fertiles peuvent être associées aux mêmes assemblages du cœur du réacteur.

En effet, le cœur du réacteur est constitué par un ensemble d'assemblages combustibles formés de faisceaux de crayons combustibles de grande longueur disposés verticalement et côte à côte à l'intérieur de la cuve du réacteur remplie d'eau sous pression.

Certains crayons combustibles du faisceau sont remplacés par des tubes-guides à l'intérieur desquels on peut déplacer verticalement un ensemble de crayons de réglage constituant les barres de commande ou un ensemble de crayons fertiles. Un assemblage sur deux dans le cœur reçoit à la fois une grappe de crayons absorbants de pilotage et une grappe de crayons fertiles. Les autres assemblages du cœur ne reçoivent ni crayons absorbants ni crayons fertiles mais des grappes de bouchons qui empêchent le by-pass du cœur par les tubes-guides. Les crayons absorbants pénètrent dans un premier ensemble de tubes-guides de l'assemblage alors que les crayons fertiles pénètrent dans un second ensemble de tubes-guides de cet assemblage.

Les grappes de crayons absorbants utilisées pour le pilotage du réacteur sont reliées à une tige de commande de grande longueur qui les prolonge vers le haut et qui se déplace à l'intérieur d'une enceinte étanche en communication avec le volume interne de la cuve du réacteur. Dans cette enceinte étanche est disposé un mécanisme de maintien et de déplacement vertical contrôlé de la tige de commande et de la grappe de crayons absorbants fixée à sa partie inférieure. Ce mécanisme de déplacement vertical contrôlé de la grappe est généralement constitué par un ensemble de cliquets de déplacement et de cliquets de maintien actionnés par des bobinages électromagnétiques. La tige de commande est usinée sur sa surface externe pour réaliser des cannelures dans lesquelles les dents des cliquets viennent se loger pour le maintien ou le déplacement de la tige de commande.

A sa partie inférieure la tige de commande de l'ensemble absorbant comporte un dispositif de liaison déconnectable entre la tige et la grappe, la séparation de celle-ci étant réalisée par exemple lorsqu'on ouvre la cuve du réacteur après sa dépressurisation pour les opérations de rechargement du cœur du réacteur.

Dans le cas où à un même assemblage sont associées deux grappes, la seconde grappe est également prolongée vers le haut par une tige de commande déconnectable de cette grappe.

Les grappes de crayons de réglage sont constituées par des crayons parallèles disposés suivant un réseau identique au réseau des tubes-guides réservés pour leur déplacement et reliés à leur partie supérieure à une pièce de fixation comportant un pommeau d'assemblage à la tige de commande.

Dans le cas d'un assemblage muni de deux types de grappes, les deux pommeaux doivent être placés coaxialement, la pièce de fixation des crayons fertiles étant disposée sous la pièce de fixation des crayons absorbants. On peut ainsi déplacer les crayons absorbants indépendamment des crayons fertiles lorsque ceux-ci sont totalement insérés, pendant la première partie du cycle de fonctionnement du réacteur.

Le dispositif de liaison déconnectable entre une tige de commande et la pièce de fixation de la grappe peut être constitué de manière habituelle par un manchon expansible latéralement comportant deux saillies venant se loger dans des rainures à l'intérieur du pommeau de la grappe, l'expansion du manchon étant obtenue par une tige de manœuvre disposée de façon centrale et axiale dans la tige de commande dont l'extrémité munie d'une olive permet l'écartement du manchon expansible.

On connaît d'autre part un dispositif de pilotage d'un réacteur nucléaire décrit dans le brevet FR-A-2 106 373 et comportant, pour un même assemblage deux grappes coaxiales, l'une de ces grappes étant une grappe de pilotage déplaçable de façon contrôlée dans le cœur du réacteur et l'autre une grappe d'arrêt qu'on peut faire retomber en position d'insertion maximum dans le cœur pour l'arrêt du réacteur.

Outre le fait que ce dispositif n'est pas transposable dans le cas d'un réacteur nucléaire amélioré tel que décrit ci-dessus, puisque la fonction de la barre d'arrêt est différente de celle de la grappe de crayons fertiles, le dispositif décrit est complexe et nécessite la présence d'un bobinage électromagnétique complémentaire pour le maintien en position haute de la barre d'arrêt.

La barre d'arrêt est disposée au-dessus de la barre de commande puisqu'elle est toujours en position haute lors du fonctionnement du réacteur, alors que la barre de crayons fertiles du réacteur à rendement amélioré décrit ci-dessus est en position basse où elle est entièrement insérée dans l'assemblage combustible, pendant la première partie du cycle de fonctionnement du réacteur.

On ne connaissait donc pas de dispositif de commande de position dans la direction verticale de deux grappes de crayons de réglage associées à un même assemblage qui permette de déplacer une grappe indépendamment de l'autre qui est en position totalement insérée dans l'assemblage et qui soit d'une forme de réalisation simple ne mettant pas en œuvre de moyens de motorisation en plus de ceux nécessaires pour le déplacement contrôlé de la première grappe de crayons de réglage.

Le but de l'invention est donc de proposer un dispositif de commande de deux grappes de crayons de réglage déplaçables verticalement dans un même assemblage combustible du cœur d'un réacteur nucléaire comportant une cuve renfermant un fluide sous pression dans lequel baigne le cœur du réacteur constitué par des assemblages formés de faisceaux de crayons combustibles disposés verticalement dans lesquels on insère les grappes pendant le fonctionnement du réacteur, l'une des grappes comportant des crayons absorbants les neutrons assurant le pilotage du réacteur par des déplacements verticaux modifiant l'insertion des crayons absorbants et la seconde grappe restant complètement insérée dans l'assemblage pendant une partie seulement du cycle de fonctionnement du réacteur, indépendamment du déplacement de la première grappe, chaque grappe étant constituée par un ensemble de crayons disposés parallèlement les uns aux autres et solidaires d'une pièce de fixation, le mécanisme comportant deux tiges de commande verticales de grande longueur associées l'une à la première et l'autre à la seconde des deux grappes, mobiles à l'intérieur d'une enceinte étanche en communication avec le volume interne de la cuve, un mécanisme de maintien et de déplacement vertical contrôlé dans l'enceinte étanche de la tige de commande de la première grappe, et un dispositif de liaison déconnectable entre chacune des deux grappes et la tige de commande correspondante, ce dispositif devant permettre le déplacement contrôlé de la première grappe, la seconde étant totalement insérée dans l'assemblage et la commande de position des deux grappes sans dispositif additionnel de motorisation en plus de ceux existant pour la première grappe de crayons absorbants.

Dans ce but,
la tige de commande de la première grappe, ou première tige de commande, est constituée par une chemise cylindrique portant dans sa partie supérieure des doigts d'accrochage mobiles transversalement pour venir en saillie dans l'espace interne de la tige de commande ou en position rétractée et un dispositif d'actionnement des doigts monté coulissant dans la direction axiale sur l'extrémité supérieure de la tige de commande, entre une position de fermeture des doigts où le dispositif de commande est maintenu en position haute par rapport à la tige de commande par un ressort et une position d'ouverture des doigts où il est déplacé en position basse grâce à une surface d'appui venant en butée sur une partie de la surface interne de l'enceinte étanche, en fin de mouvement vers le haut de la première tige de commande,

la tige de commande de la seconde grappe, ou seconde tige de commande, disposée coaxialement et à l'intérieur de la première tige de commande sur toute sa longueur comporte une partie élargie munie d'au moins deux segments d'étanchéité limitant le passage du fluide sous pression dans l'espace annulaire ménagé entre les deux tiges de commande et assurant le guidage de la seconde tige de commande constituant un piston dans la première tige de commande, une rainure d'accrochage des doigts portés par la première tige de commande et une partie en saillie servant de butée pour l'arrêt de la seconde tige de commande en position d'accrochage des doigts, en fin de mouvement vers le haut de la seconde tige dans la première,

enfin, l'enceinte étanche comporte à sa partie supérieure une vanne de décompression de son volume interne.

On va maintenant décrire à titre d'exemple non limitatif, en se référant aux figures jointes en annexe, un mode de réalisation d'un dispositif de commande suivant l'invention, dans le cas d'une grappe de crayons de pilotage et d'une grappe de crayons fertiles de variation du spectre neutronique déplaçables dans un même assemblage combustible d'un réacteur nucléaire à rendement amélioré.

La figure 1 est une vue en coupe par un plan vertical de la partie inférieure du dispositif de commande.

La figure 1a est une vue suivant F de la figure 1.

La figure 2 est une vue en coupe par un plan vertical de la partie supérieure du dispositif.

La figure 2a est une vue à plus grande échelle d'une partie de la figure 2 montrant en particulier les doigts pivotants et leur mécanisme d'actionnement.

La figure 2b est une vue à plus grande échelle d'une partie de la figure 2 montrant en particulier l'extrémité supérieure de la seconde tige de commande.

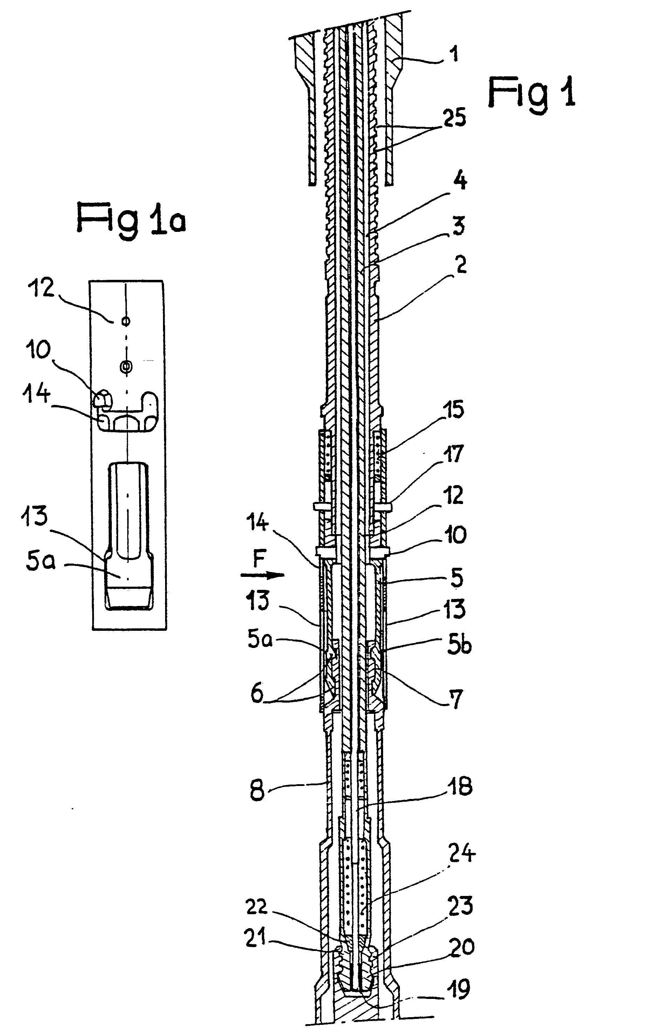

Sur la figure 1 on voit une partie de l'enceinte étanche 1 dont l'extrémité inférieure non représentée est fixée sur le couvercle de cuve pour mettre le volume interne de cette enceinte étanche en communication avec le volume interne de la cuve remplie d'eau sous pression.

Suivant l'axe de cette enceinte étanche 1 sont disposées concentriquement les tiges de commande 2 et 3 de la grappe de pilotage et de la grappe de variation de spectre respectivement.

Le diamètre extérieur de la tige de commande intérieure 3 est tel qu'il existe un espace annulaire 4 entre les deux tiges de commande.

A la partie inférieure de la tige de commande 2 est fixé un manchon d'accouplement 5 comportant deux lames flexibles $5_a$ et $5_b$ dans sa partie inférieure. Les lames flexibles $5_a$ et $5_b$ comportent sur leur surface interne des parties en saillie 6 permettant leur engagement dans des rainures correspondantes du pommeau 7 de la grappe de pilotage. Ce pommeau 7 est relié par une chemise cylindrique 8 à un croisillon non représenté sur lequel sont fixés les crayons de pilotage constituant la barre de commande, suivant une disposition permettant leur introduction dans un premier ensemble de tubes-guides de l'assemblage disposé à la verticale et en-dessous du mécanisme représenté à la figure 1.

Sur le manchon 5 sont fixés deux pions 10 saillants vers l'extérieur du manchon 5 sur lesquels est montée une chemise de verrouillage 12 visible sur les figures 1 et 1a.

La chemise de verrouillage 12 symétrique par rapport au plan axial perpendiculaire au plan de figure, comme le manchon 5, comporte deux lumières identiques 13 permettant le dégagement des lames flexibles $5_a$ et $5_b$ latéralement et deux lumières 14 en forme de U pour le passage des pions 10. La chemise de verrouillage 12 est montée à frottement doux sur le manchon 5 et est maintenue en position basse par un ressort 15 intercalé entre la partie inférieure de la tige 2 et la chemise 12. Sur la chemise de verrouillage 12 sont également fixés des pions d'actionnement 17 légèrement saillants vers l'extérieur de cette chemise de verrouillage.

A l'intérieur de la tige 3 est montée, suivant toute sa longueur, une tige de manœuvre 18 portant à sa partie inférieure une olive 19 engagée dans l'alésage interne de la partie inférieure de la tige de commande 3 constituant un manchon 20. Le manchon 20 est constitué de plusieurs lames flexibles permettant son expansion radiale. Chacune des lames flexibles comporte sur sa surface externe des saillies 21 correspondant à des rainures usinées à l'intérieur du pommeau 23 de la grappe de variation de spectre. Le pommeau 23 est relié à un croisillon portant les crayons fertiles non représentés. La pièce de fixation des crayons fertiles est disposée en-dessous de la pièce de fixation des crayons absorbants de pilotage reliée à la tige de commande 2.

La tige de manœuvre 18 comporte, en partie haute, une pièce de raccord 68 qui est poussée vers le bas par le ressort 69 en appui sur une partie de la surface interne de la tige 3. L'olive 19 est d'un diamètre suffisant pour permettre l'expansion du manchon 20 et l'accrochage de la grappe de crayons fertiles par l'intermédiaire de son pommeau 23, lorsque la tige de manœuvre est dans sa position basse représentée à la figure 1. L'écartement des lames du manchon est également assuré de manière redondante par le galet 22 qui est repoussé par le ressort 24.

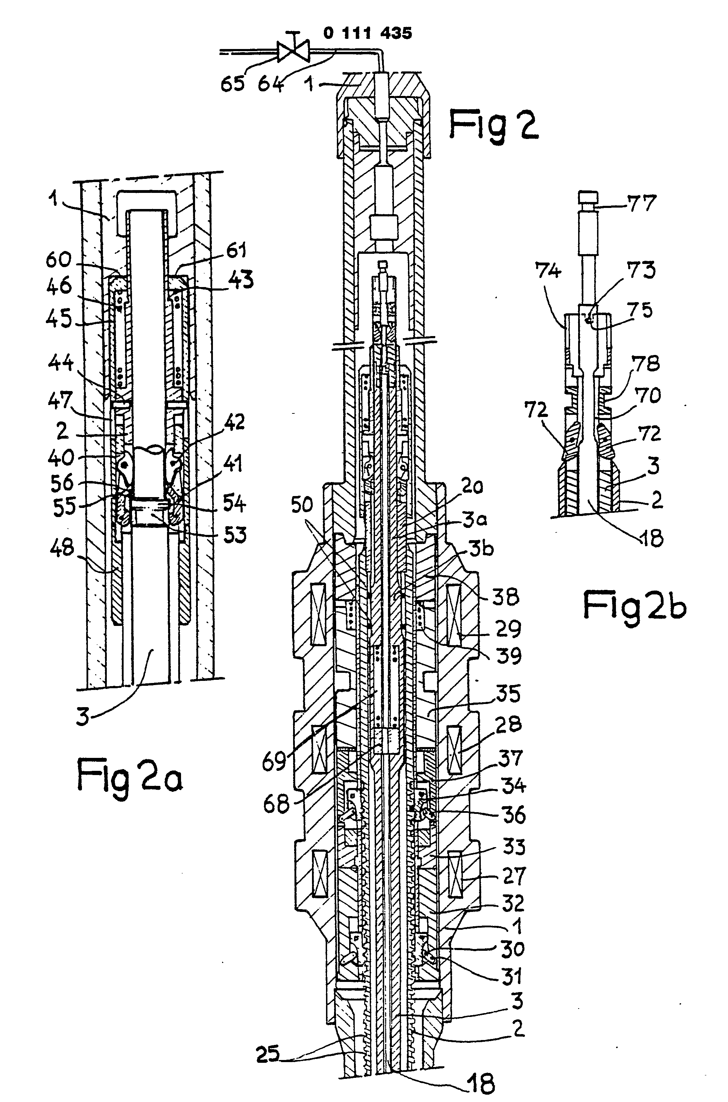

Sur la figure 2, on voit la partie supérieure des tiges 2 et 3 à l'intérieur de l'enceinte étanche 1 et suivant son axe.

La tige de commande 2 est usinée sur sa surface externe suivant des cannelures 25 régulièrement espacées sur une longueur de la tige de commande correspondant à la longueur de la grappe c'est-à-dire également à la hauteur de l'assemblage.

Autour de l'enceinte étanche sont disposés trois bobinages électromagnétiques 27, 28 et 29. Le bobinage 27, appelé bobinage de maintien, permet d'actionner un jeu de cliquets de maintien 30 par l'intermédiaire de biellettes 31 articulées sur les cliquets à l'une de ses extrémités et sur une pièce magnétique mobile 32 à son autre extrémité. L'alimentation du bobinage 27 permet d'attirer et de maintenir en position haute le pôle mobile 32 contre une pièce magnétique fixe ou pôle fixe de maintien 33. Le cliquet 30 à double denture a été représenté sur la figure 2 dans sa position de fermeture où il maintient la tige de commande 2 en position verticale fixe.

Le bobinage 28 permet la fermeture des cliquets 34, appelés cliquets de transfert, montés pivotants sur une pièce magnétique 35, la fermeture des cliquets 34 étant obtenue grâce à des biellettes 36 et à une pièce magnétique 37 montée sur la pièce 35 et mobile par rapport à celle-ci.

Le bobinage 29 permet de déplacer la pièce 35 entre une position haute où elle vient se coller par attraction magnétique sur une pièce fixe 38 et une position basse à laquelle elle est rappelée par un ressort 39. D'une façon générale, les pièces magnétiques mobiles sont rappelées en position basse par des ressorts.

L'ensemble du mécanisme de déplacement de la barre 2 comportant les trois bobinages 27, 28 et 29 et l'ensemble des pièces magnétiques mobiles fixes est bien connu et est actuellement utilisé sur les réacteurs nucléaires à eau pressurisée en service.

Le cliquet de transfert 34 dont l'amplitude de mouvement est égale à la distance séparant deux cannelures permet de déplacer, vers le haut ou vers le bas, la tige de commande 2 et la grappe de pilotage qui lui est reliée suivant un déplacement vertical dont l'amplitude est égale au pas, c'est-à-dire à la distance séparant deux cannelures de la tige de commande 2. Après chaque pas, la barre est reprise en charge par le cliquet de maintien 30, ce qui permet de ramener le cliquet de transfert 34 dans sa position initiale après en avoir réalisé l'ouverture grâce à la bobine 28. Les déplacements de la tige de commande 2 sont effectués pas par pas grâce à l'ensemble des bobinages 27, 28 et 29 alimentés successivement.

Ainsi qu'il est visible sur les figures 2 et 2a, la tige de commande 2 porte dans sa partie supérieure, à l'intérieur d'embrèvements 40, des doigts pivotants 41 montés sur des axes horizontaux 42. Par pivotement, l'extrémité des doigts 41 peut venir plus ou moins en saillie à l'intérieur de l'espace interne de la tige de commande 2. On n'a représenté que deux doigts pivotants 41 sur les figures 2 et 2a, mais il existe quatre doigts 41 disposés dans des embrèvements à 90° à l'intérieur de l'enveloppe de la chemise cylindrique de grande longueur constituant la tige de commande 2.

Au-dessus des doigts 41, la tige de commande 2 porte des pions 44 légèrement saillants vers l'extérieur. Une chemise d'actionnement 45 constituant le dispositif de commande des doigts 41 est montée coulissante sur l'extrémité supérieure de la tige de commande 2, un ressort 46 étant intercalé entre la partie supérieure de la chemise 45 et une partie de la tige de commande 2 de façon à maintenir cette chemise 45 en position haute par rapport à la tige de commande 2. Les pions 44 sont engagés dans des lumières 47 de la paroi de la chemise 45 de façon à immobiliser en rotation la chemise d'actionnement 45 sur la tige de commande 2. Les pions 44 constituent également deux butées limitant le mouvement vers le haut de la chemise d'actionnement 45 par rapport à la tige 2 comme représenté sur la figure 2a où la chemise 45 a été représentée dans sa position basse. La limitation vers le bas de la course de la chemise d'actionnement 45 est effectuée à l'aide de la butée 43 ménagée à la partie supérieure de la tige de commande 2. La chemise 45 comporte à sa partie inférieure une came d'actionnement 48 des doigts 41 constituée par une surépaisseur annulaire sur la surface interne de cette chemise 45. Dans la position basse de la chemise 45 représentée sur la figure 2a, la came 48 n'agit pas sur les doigts pivotants 41 qui sont alors maintenus en position d'ouverture par des ressorts associés aux axes 42. Au contraire, lorsque la chemise 45 est maintenue en position haute par le ressort 46, comme représenté sur la figure 2, la came 48 agit sur les doigts 41 pour les maintenir en position de fermeture où ils viennent largement en saillie à l'intérieur de l'espace interne de la tige de commande 2.

On voit sur les figures 1 et 2 que la tige de commande 3 est montée coaxialement à la tige de commande 2 sur toute sa longueur et à l'intérieur de celle-ci. Entre les tiges de commande 2 et 3 est réservé un passage annulaire de diamètre variable rempli de fluide sous pression, lorsque le réacteur est en fonctionnement, le volume intérieur de l'enceinte étanche 1 étant alors en communication avec le volume interne de la cuve remplie de fluide sous pression. Ce passage annulaire est continu sur toute sa circonférence sur une partie de la longueur des tiges et constitué par des secteurs discontinus au niveau des guidages $2_a$-$3_a$ de la tige 3 dans l'espace interne de la tige 2.

De plus, la tige centrale 3 comporte une partie élargie $3_b$ sur laquelle sont disposés deux segments d'étanchéité 50 permettant néanmoins un passage limité de fluide de refroidissement sous pression dans le passage annulaire entre les tiges de commande 2 et 3. Les segments 50 permettent également le guidage axial de la tige de commande 3 à l'intérieur de la tige de commande 2, la partie $3_b$ de la tige de commande 3 constituant un piston mobile à l'intérieur de l'alésage de la tige 2.

La tige de commande centrale 3 comporte d'autre part une cannelure 53 dans sa partie supérieure limitée par une partie en saillie 54 comportant un épaulement supérieur 55. On voit également sur la figure 2a que l'épaulement supérieur 55 dans la position haute de la tige 3 représentée sur les figures 2 et 2a vient en butée sur une surface d'appui 56 ménagée sur la surface interne de la tige de commande 2. Dans cette position de la tige de commande interne 3, la rainure 53 se trouve en face de l'extrémité d'accrochage des doigts 41.

La chemise d'actionnement 45 comporte d'autre part un épaulement supérieur 60 venant en contact avec une surface d'appui 61 ménagée dans la chambre étanche 1, ce qui permet de ramener en position basse, comme représenté sur la figure 2a, la chemise d'actionnement 45, contre l'action du ressort, en fin de mouvement vers le haut de la tige 2 portant la chemise 45. Dans cette position, les doigts 41 sont écartés comme représenté sur la figure 2a.

La partie supérieure de la chambre 1 est d'autre part reliée à une conduite 64 sur laquelle est placée une vanne de décompression 65. L'ouverture de cette vanne de décompression permet d'abaisser très rapidement la pression dans la partie supérieure de la chambre 1, en particulier dans la partie de l'espace annulaire compris entre les tiges de commande 2 et 3 situé au-dessus des segments d'étanchéité 50. La face inférieure du piston $3_b$ subit alors la poussée due à la différence de pression du fluide de part et d'autre des segments 50. Il s'ensuit un déplacement vers le haut de la tige de commande 3 jusqu'au moment où celle-ci vient en butée par son épaulement 55 sur la surface d'appui 56.

A sa partie supérieure la tige 18, comme il est visible sur les figures 2 et $2_b$, comporte une partie à plus faible diamètre 70 terminée par des rampes tronconiques permettant d'actionner des cames pivotantes 72 portées par la tige de commande 3 dont les surfaces d'appui sur la tige de manœuvre 18 sont telles que les cames 72 sont légèrement saillantes vers l'extérieur lorsque la tige 18 est en position haute comme représenté sur la figure 2$_b$ et en position rétractée lorsque la tige est dans sa position basse telle que représenté à la figure 2. Lorsque la tige 18 est en position basse, c'est-à-dire en position de verrouillage de la tige de commande 3 dans le pommeau de grappe 23, les parties internes en saillie des cames 72 se trouvent au niveau de la partie à faible diamètre 70 de la tige de manœuvre 18 ce qui permet le retour en position rétractée où leurs extrémités ne sont pas en saillie à l'extérieur de la tige de commande 3.

La tige de commande 3 comporte à sa partie supérieure deux fentes courtes 73 et deux fentes longues 74, dans sa paroi latérale, ces fentes débouchant à la partie supérieure de la tige de commande 3. Les fentes 73 et 74 sont disposées à 90° et la tige de manœuvre 18 comporte deux pions 75 qui peuvent être engagés soit dans les fentes 73 soit dans les fentes 74. Les ressorts 24, 69 entraînant la tige de manœuvre 18 vers le bas provoquent donc la mise en butée de cette tige 18 soit au fond des fentes 73 soit au fond des fentes 74, par l'intermédiaire des pions 75, suivant l'orientation de la tige de manœuvre 18 par rapport à la tige de commande 3.

A sa partie supérieure la tige 18 comporte une cannelure 77 pour l'engagement de l'élément de prise d'un outillage d'actionnement de la tige de manœuvre qui peut être fixé sur la tige de commande, dans la gorge d'arrimage 78 ménagée sur la surface extérieure de celle-ci.

Nous allons maintenant décrire le fonctionnement du dispositif au cours des différentes manœuvres nécessaires lors du fonctionnement du réacteur entre deux rechargements.

Lorsqu'on vient d'effectuer le rechargement du réacteur, les grappes sont en position insérée dans les assemblages combustibles correspondants et il faut effectuer le réaccouplement des tiges de commande avec les grappes de crayons de réglage. Les tiges de commande sont disposées dans les guides de grappes des équipements internes supérieurs du réacteur qu'on vient mettre en place au-dessus du cœur, à l'intérieur de la cuve du réacteur.

Les manchons d'accouplement 5 et 20 des deux tiges de commande sont en position déverrouillée, la chemise de verrouillage 12 étant orientée comme représenté sur la figure 1a et la tige de manœuvre 18 étant en position haute maintenue par l'intermédiaire des pions 75 dans les fentes courtes 73.

On effectue d'abord le réaccouplement des tiges de commande 2 des grappes de pilotage du réacteur. Pour celà, on utilise un outillage suspendu au treuil de la machine de chargement du réacteur qu'on vient accoster sur la partie supérieure de la tige de commande 2 dans le guide de grappes des équipements internes supérieurs. L'outillage comporte un long tube télescopique qui permet de descendre la tige de commande en position au-dessus du pommeau de grappes 7 sur lequel le manchon 5 s'accouple en fin de course sous l'effet du poids de la tige de commande et de l'outillage. L'accouplement est réalisé par une légère déformation latérale des lames flexibles 5$_a$ et 5$_b$ jusqu'au moment où les parties en saillie de ces lames viennent se loger dans les rainures du pommeau de grappes 7.

La partie inférieure du tube télescopique comporte une fente en forme de J qui peut être engagée sur les pions 17 pour réaliser une liaison à baïonnette entre le tube télescopique de l'outil et la chemise de verrouillage 12. Par rotation et translation de l'outil on peut déplacer la chemise 12 de façon à faire passer les pions 10 d'une branche à l'autre de la lumière 14 en forme de U. On réalise ainsi le verrouillage des lames flexibles 5$_a$ et 5$_b$ en venant placer en face de ces lames la partie pleine de la chemise de verrouillage 12. On manœuvre alors le tube télescopique de façon à dégager les pions 17 des fentes en forme de J de cet outillage. On escamote l'outil et l'on vérifie le verrouillage du manchon d'accouplement en vérifiant à l'aide d'un peson qu'on entraîne bien en même temps la tige de commande et sa grappe en soulevant l'outil.

On recommence l'opération pour chacun des assemblages comportant une grappe de pilotage.

On effectue ensuite le réaccouplement des tiges de commande 3 avec les pommeaux 23 des grappes de variation de spectre. Pour celà, on utilise un second outillage suspendu au treuil de la machine de chargement du réacteur qui est accosté sur la partie supérieure de la tige de commande 3 en utilisant la gorge d'accostage 78. Les tiges de commande 3 sont en effet engagées à l'intérieur des tiges de commande 2 et il suffit d'utiliser l'outillage pour descendre la tige de commande 3 jusqu'au moment où le manchon 20 vient s'engager dans le pommeau 23 de la grappe de variation de spectre. On réalise alors le verrouillage du manchon 20 grâce à la tige de démontage 18 qui est soulevée par l'outillage puis tournée d'un quart de tour pour engager les pions 75 dans les fentes longues 74. La tige redescend alors sous l'effet des ressorts 24, 69 si bien que l'olive 19 vient en position d'écartement du manchon expansible 20 comme représenté sur la figure 1.

L'opération est effectuée pour chacun des assemblages comportant à la fois une grappe de pilotage et une grappe de variation de spectre.

On vérifie après chaque opération le verrouillage correct des manchons en commandant la remontée de l'outillage et en vérifiant avec un peson que l'on soulève bien alors l'ensemble des deux tiges de commande et des deux grappes.

Lorsque l'ensemble des deux tiges de commande a été réaccouplé on remet en place le couvercle de cuve sur lequel sont fixées les enceintes étanches 1 portant le mécanisme de déplacement de la tige de commande 2 avant les opérations de mise en route du réacteur.

Pendant la première partie du cycle de fonctionnement du réacteur, les grappes de variation de spectre constituées de crayons fertiles sont laissées en position d'insertion maximum dans les assemblages alors que les grappes de pilotage sont utilisées pour la conduite du réacteur. En effet, la tige de commande 2 et la tige de commande 3 sont tout-à-fait indépendantes et les déplacements de la tige de commande 2 n'entraînent aucun déplacement de la tige de commande 3 et de la grappe de variation de spectre. D'autre part, on a vérifié que les temps de chute des barres de commande assurant le pilotage du réacteur sont identiques aux temps enregistrés dans les réacteurs ne comportant pas de grappes de variation de spectre, malgré la présence de la tige de commande 3 prolongeant ces grappes de variation de spectre.

A la fin de la première partie du cycle de fonctionnement du réacteur (dont la durée est approximativement égale aux quatre/cinquièmes de la campagne d'exploitation du réacteur), il faut extraire progressivement les grappes de variation de spectre et pour celà on commence par celles qui sont associées à des barres de commande qui se situent déjà en position haute pour éviter de perturber le pilotage du réacteur. Au-delà de cette position haute, il existe une légère surcourse de la tige de commande 2 qui permet de venir mettre en butée la surface d'appui 60 de la chemise 45 sur l'épaulement 61 de l'enceinte étanche 1. La surcourse permet un déplacement relatif de la chemise 45 et de la tige 2, le ressort 46 étant alors comprimé, de façon à dégager les doigts de la came 48. Les doigts 41 sont alors en position d'ouverture. On ouvre alors la vanne de décompression 65 ce qui a pour effet de créer très rapidement une dépression de l'ordre de 22 bars dans la partie supérieure de l'enceinte étanche 1 et dans l'espace annulaire entre les tiges de commande 2 et 3 au-dessus des segments 50. La tige de commande 3 est alors chassée vers le haut à l'intérieur de la tige de commande 2 en entraînant la grappe de variation de spectre qui est extraite de l'assemblage lors de son mouvement vers le haut.

Le mouvement vers le haut de la tige de commande 3 se poursuit jusqu'au moment où l'épaulement 55 vient en butée sur la surface d'appui 56. La cannelure 53 est alors en position en face des extrémités d'accrochage des doigts 41. On redescend alors la tige de commande 2 de deux à trois pas en utilisant le mécanisme électromagnétique de déplacement contrôlé de cette tige de commande. Ceci a pour effet de ramener les doigts en face de la came de fermeture 48 qui referme ces doigts dans la cannelure 53. Les deux tiges de commande 2 et 3 sont alors solidarisées.

Les déplacements de la tige de commande 2 entraînent donc à la fois la grappe de crayons de pilotage et la grappe de crayons de variation de spectre. La masse déplacée par le mécanisme à cliquets est donc plus importante que dans le fonctionnement actuel d'un réacteur nucléaire à eau sous pression ce qui pourrait conduire à une usure plus rapide des cliquets. Cependant, pendant cette partie du cycle de fonctionnement représentant un/cinquième de la durée totale du cycle, le réacteur nucléaire fonctionne en centrale de base et les mouvements de grappe sont très limités si bien que l'accroissement d'usure des cliquets reste faible.

En cas d'arrêt d'urgence l'alimentation électrique des bobines est coupée ce qui ouvre les cliquets 30 et 34. L'ensemble des deux grappes retombe donc sous l'effet de son poids en position d'insertion maximum.

A la fin du cycle de fonctionnement du réacteur, on réalise tout d'abord le décrochage des tiges de commande 3 des grappes de crayons fertiles. Pour celà, on amène à nouveau la tige de commande 2 en surcourse haute, ce qui a pour effet de provoquer l'ouverture des doigts 41 par déplacement vers le bas de la chemise d'actionnement des doigts 45.

Les tiges de commande 3 retombent alors avec leurs grappes en position d'insertion maximum. Cette chute est très lente puisque le fluide sous pression déplacé lors de la chute de la tige de commande 3 est laminé dans l'espace de très faible dimension ménagé entre la partie supérieure de la tige de commande 2 et l'alésage de l'enceinte étanche 1 située au-dessus de la surface d'appui 61, comme il est visible sur la figure 2a.

Les opérations sur les barres de commande de pilotage du réacteur sont alors identiques à ce qu'elles étaient pour les réacteurs à eau pressurisée de type classique, avant un rechargement.

Après dépressurisation de la cuve du réacteur et enlèvement du couvercle, on réalise le déverrouillage et le désaccouplement des tiges de commande en utilisant les mêmes outillages qui ont permis l'accouplement et le verrouillage de ces tiges de commande sur les grappes correspondantes.

Lorsque la tige de manœuvre 18 est amenée en position de déverrouillage, les pions 75 étant introduits dans les fentes courtes 73, les extrémités des cames 72 sont en position légèrement saillante par rapport à la surface externe de la tige de commande 3. Lorsqu'on a déverrouillé l'ensemble des tiges de commande et qu'on réalise le levage des équipements internes supérieurs entraînant les tiges de commande 2 reposant dans ces équipements internes, on entraîne en même temps les tiges de commande 3 qui reposent, par l'intermédiaire des cames 72 sur l'extrémité supérieure des tiges de commande 2.

On voit donc que le dispositif suivant l'invention permet de résoudre tous les problèmes relatifs à l'insertion et à l'extraction des grappes de commande et des grappes de variation de spectre ainsi qu'au montage et au démontage des tiges de commande de ces grappes sans nécessiter de dispositifs de motorisation supplémentaires par rapport à ceux qui sont utilisés dans les réacteurs nucléaires à eau sous pression de type classique.

En particulier, on évite l'utilisation d'une bobine électromagnétique de maintien supplémentaire pour l'accrochage en position haute de la tige de commande de la grappe de variation de spectre, pendant la dernière partie du cycle de fonctionnement du réacteur. On évite également l'utilisation de tout type de motorisation additionnelle pour l'extraction des grappes de variation de spectre.

L'invention ne se limite pas au mode de réalisation qui vient d'être décrit ; c'est ainsi qu'au lieu d'un mécanisme de déplacement à cliquets et à bobines électromagnétiques on peut utiliser, pour le déplacement de la tige de commande de la grappe de pilotage, tout autre type de mécanisme tel qu'un mécanisme à vis et écrou ou un mécanisme à couplage magnétique.

On peut également imaginer d'autres types de fixation des extrémités inférieures des tiges de commande sur le pommeau des grappes ou d'autres principes de commande des doigts 41 montés en partie supérieure de la tige de commande 2.

Enfin, le dispositif de commande suivant l'invention s'applique non seulement aux réacteurs nucléaires à eau sous pression à rendement amélioré utilisant une grappe de variation de spectre en plus des grappes de commande mais encore à tout réacteur utilisant des grappes totalement insérées pendant une partie du cycle de fonctionnement du réacteur en plus des grappes de commande à déplacement contrôlé.

## Revendications

1. Dispositif de commande de deux grappes de crayons de réglage déplaçables verticalement dans un même assemblage combustible du cœur d'un réacteur nucléaire comportant une cuve renfermant un fluide sous pression dans lequel baigne le cœur du réacteur constitué par des assemblages formés de faisceaux de crayons combustibles disposés verticalement, dans lesquels on insère les grappes pendant le fonctionnement du réacteur, l'une de ces grappes comportant des crayons absorbants les neutrons assurant le pilotage du réacteur par des déplacements verticaux modifiant l'insertion des crayons absorbants et la seconde grappe restant complètement insérée dans l'assemblage pendant une partie seulement du cycle de fonctionnement du réacteur, indépendamment des déplacements de la première grappe, chacune des grappes étant constituée par un ensemble de crayons disposés parallèlement les uns aux autres et solidaires d'une pièce de fixation, le mécanisme comportant, deux tiges de commande (2, 3) verticales de grande longueur associées l'une à la première et l'autre à la seconde des deux grappes, mobiles à l'intérieur d'une enceinte étanche (1) en communication avec le volume interne de la cuve, un mécanisme (27, 28, 29, 30, 34) de maintien et de déplacement vertical contrôlé dans l'enceinte étanche de la tige de commande (2) de la première grappe et un dispositif de liaison déconnectable entre chacune des deux grappes et la tige de commande (2, 3) correspondante, caractérisé par le fait que :

la tige de commande (2) de la première grappe ou, première tige de commande, est constituée par une chemise cylindrique portant dans sa partie supérieure des doigts d'accrochage (41) mobiles transversalement pour venir en saillie dans l'espace interne de la tige de commande (2) ou au contraire en position rétractée et un dispositif de commande (45) de ces doigts monté coulissant dans la direction axiale sur l'extrémité supérieure de la tige de commande (2), entre une position de fermeture des doigts (41) où le dispositif de commande (45) est maintenu en position haute par rapport à la tige de commande (2) par un ressort (46) et une position d'ouverture des doigts (41) où il est déplacé en position basse, grâce à une surface d'appui (60) venant en butée sur une partie (61) de la surface interne de l'enceinte étanche (1), en fin de mouvement vers le haut de la première tige de commande (2),

la tige de commande (3) de la seconde grappe, ou seconde tige de commande, disposée coaxialement et à l'intérieur de la première tige de commande (2), sur toute sa longueur comporte une partie élargie ($3_b$) munie de segments d'étanchéité (50) limitant le passage du fluide sous pression dans l'espace annulaire ménagé entre les deux tiges de commande (2, 3) et assurant le guidage de la seconde tige de commande (3) constituant un piston dans la première tige de commande (2), une rainure (53) d'accrochage des doigts (41) portés par la première tige de commande (2) et une partie en saillie (55) servant de butée pour l'arrêt de la seconde tige de commande en position d'accostage des doigts en fin de mouvement vers le haut de la seconde tige (3) dans la première (2),

enfin, l'enceinte étanche (1) comporte, à sa partie supérieure, une vanne de décompression (65) de son volume interne.

2. Dispositif de commande suivant la revendication 1, caractérisé par le fait que la première tige de commande (2) porte à son extrémité inférieure un manchon d'accouplement expansible latéralement (5) présentant sur sa surface interne des saillies d'accrochage (6) destinées à coopérer avec des rainures (7) usinées sur la surface externe de la pièce de fixation de la première grappe et une chemise de verrouillage (12) du manchon (5) en position d'accrochage de la grappe montée sur l'extrémité de la tige de commande (2), autour du manchon (5) et mobile en rotation et en translation axiale, la tige de commande (3) de la seconde grappe étant munie d'un dispositif d'accrochage de grappe connu en soi comportant un manchon expansible (20) muni de saillies externes (21) destiné à être introduit dans une ouverture correspondante de la pièce de fixation de la grappe et une tige centrale (18) munie d'une olive (19) à son extrémité pour le verrouillage du manchon (20).

3. Dispositif de commande suivant la revendication 2, caractérisé par le fait que la chemise de verrouillage (12) du manchon expansible (5) solidaire de la première tige de commande (2) comporte deux lumières (13) pour le passage de

lames flexibles (5$_a$, 5$_b$) constituant le manchon expansible (5), dans leur position d'ouverture et deux lumières en U (14) pour l'engagement de doigts de verrouillage (10) solidaires de la première tige de commande (2), la chemise de verrouillage (12) étant repoussée vers le bas par un ressort (15) intercalé entre la tige de commande (2) et la chemise de verrouillage (12).

4. Application d'un dispositif de commande suivant l'une quelconque des revendications 1, 2 et 3 dans le cas d'un réacteur nucléaire à rendement amélioré dont une partie des assemblages est équipée à la fois d'une grappe de commande et d'une grappe de variation de spectre.

**Claims**

1. An actuating device for two clusters of control rods movable vertically in a same fuel assembly in the core of a nuclear reactor comprising a vessel containing pressurized fluid in which is immersed the reactor core consisting of assemblies formed by vertically arranged bundles of fuel rods into which the clusters are inserted during the operation of the reactor, one of the clusters comprising neutron-absorbing rods effecting the control of the reactor by vertical movements modifying the degree of insertion of the absorbing rods, and the second cluster remaining fully inserted in the array during only part of the operating cycle of the reactor, independently of the movements of the first cluster, each of the clusters consisting of a set of mutually parallel rods attached to a connecting piece, the mechanism comprising two long vertical actuating rods (2, 3), the one associated with the first and the other with the second of the two clusters, movable within a fluid-tight enclosure (1) communicating with the internal volume of the vessel, a holding and vertical movement mechanism (27, 28, 29, 30, 34) in the fluid-tight enclosure of the actuating rod (2) of the first cluster and a detachable connecting device between each of the two clusters and the corresponding actuating rod (2, 3), characterized in that

the actuating rod (2) of the first cluster, or first actuating rod, consists of a cylindrical sleeve carrying in its upper part hooking fingers (41) movable transversely to project into the internal space of the actuating rod (2) or on the contrary into a retracted position and an actuating device (45) for these fingers in the axial direction connected to the top end of the actuating rod (2) for slidable movement between a closed position of the fingers (41) where the actuating device (45) is maintained in a top position relative to the actuating rod (2) by a spring (46) and an open position of the fingers (41) where it is moved into a bottom position due to a bearing surface (60) coming into abutment on a part (61) of the internal surface of the fluid-tight enclosure (1) at the end of the upward movement of the first actuating rod (2),

the actuating rod (3) of the second cluster, or second actuating rod, arranged coaxially and within the first actuating rod (2) throughout its length comprises a widened part (3$_b$) fitted with sealing segments (50) limiting the passage of pressurized fluid in the annular space between the two actuating rods (2, 3) and guiding the second actuating rod (3) constituting a piston in the first actuating rod (2), a hooking groove (53) for the fingers (41) carried by the first actuating rod (2) and a projecting part (55) serving as an abutment to stop the second actuating rod in the hooked position of the fingers at the end of the upward movement of the second rod (3) in the first (2),

latly, the fluid-tight enclosure (1) comprises at its upper part a valve (65) for pressure relief of the internal volume.

2. An actuating device as claimed in claim 1, characterized in that the first actuating rod (2) carries at its lower end a laterally expansible bushing (5) formed on its internal surface with hooking projections (6) cooperating with grooves (7) machined on the external surface of the fixing piece of the first cluster and a locking sleeve (12) of the bushing (5) in the hooking position of the cluster fitted on the end of the actuating rod (2) about the bushing (5) and movable in rotation and in axial translation, the actuating rod (3) of the second cluster being provided with a known per se cluster hooking device comprising an expansible bushing (20) equipped with external projections (21) intended to be introduced into a corresponding orifice of the fixing piece of the cluster and a central rod (3) equipped with a bulged portion (19) at its end for locking the bushing (20).

3. An actuating device as claimed in claim 2, characterized in that the locking sleeve (12) of the expansible bushing (5) fast with the first actuating rod (2) comprises two ports (13) for the passage of flexible blades (5$_a$, 5$_b$) forming the expansible bushing (5) when in their open position and two U-shaped ports (14) for the engagement of locking fingers (10) fast with the first actuating rod (2), the locking sleeve (12) being based downwards by a spring (15) interposed between the actuating rod (2) and the locking sleeve (12).

4. Application of an actuating device as claimed in any of claims 1, 2 and 3 to a nuclear reactor with improved efficiency, a part of the arrays of which is equipped with a control cluster and with a spectrum variation cluster simultaneously.

**Patentansprüche**

1. Steuervorrichtung für zwei Bündel von Regelstäben, die in ein und demselben Brennelementbündel im Kern eines Kernreaktors vertikal bewegbar sind, der ein mit Druckfluid gefülltes Druckgefäß aufweist, in welchem der Reaktorkern schwimmt, welcher durch Brennelementbündel gebildet ist, die Bündel von vertikal angeordneten Brennstäben aufweisen, in welche während des Reaktorbetriebes die Bündel von Regelstäben eingeführt werden, von denen das eine Bündel Neutronen absorbierende Stäbe aufweist und durch Vertikalbewegung die Steuerung des Reaktors bewirkt, indem die Einführtiefe der absorbierenden Stäbe verändert wird, wogegen das zweite Bündel während eines Abschnittes des Funktionszyklus des Reaktors unabhängig von der Bewegung des ersten Bündels vollständig in das Brennelementbündel eingeführt bleibt, wobei jedes Regelstabbündel durch einen Satz von Stäben gebildet ist, die parallel zueinander angeordnet und mit einem Befestigungsteil verbunden sind, wobei der Mechanismus zwei vertikale Steuerstangen (2, 3) großer Länge aufweist, von denen die eine dem ersten und die andere dem zweiten Bündel zugeordnet ist und die im Inneren eines dichten Gehäuses (1) bewegbar sind, das mit dem Innenraum des Reaktordruckgefäßes in Verbindung steht, wobei eine Einrichtung (27, 28, 29, 30, 34) zum Halten und zur gesteuerten Vertikalbewegung im dichten Gehäuse der Steuerstange (2) des ersten Bündels und eine lösbare Einrichtung zum Verbinden jedes der Bündel mit der zugeordneten Steuerstange (2, 3) vorgesehen sind, dadurch gekennzeichnet,

daß die Steuerstange (2) des ersten Bündels bzw. erste Steuerstange durch einen zylindrischen Mantel gebildet ist, der in einem oberen Abschnitt Verriegelungsfinger (41), die in der Querrichtung bewegbar sind, um in den Innenraum der Steuerstange (2) vorzuragen, bzw. in der entgegengesetzten Richtung in eine zurückgezogene Stellung bewegbar sind, und eine Steuereinrichtung (45) für diese Finger aufweist, die am oberen Ende der Steuerstange (2) in axialer Richtung zwischen einer Schließstellung der Finger (41), in welcher die Steuereinrichtung (45) bezüglich der Steuerstange (2) durch eine Feder (46) in der angehobenen Stellung gehalten ist, und einer Stellung gleitverschiebbar ist, in welcher die Finger (41) geöffnet sind und die Steuereinrichtung über eine Anschlagfläche (60) in die abgesenkte Stellung bewegt ist, die an einem Teil (61) der Innenfläche des dichten Gehäuses (1) am Ende der Aufwärtsbewegung der ersten Steuerstange (2) zur Anlage kommt,

daß die Steuerstange (3) des zweiten Bündels bzw. zweite Steuerstange über ihre gesamte Länge koaxial und im Inneren der ersten Steuerstange (2) angeordnet ist und einen vergrößerten Abschnitt (3b), der mit Dichtsegmenten (50) versehen ist, welche den Druckfluiddurchtritt in den Ringraum zwischen den beiden Steuerstangen (2, 3) begrenzen und die Führung der innerhalb der ersten Steuerstange (2) einen Kolben bildenden zweiten Steuerstange (3) bewirken, eine Ringnut (53) für den Eingriff der von der ersten Steuerstange (2) getragenen Finger (41) sowie einen vorragenden Teil (55) aufweist, der als Anschlag für das Stillsetzen der zweiten Steuerstange in der Eingriffsstellung der Finger am Ende der Aufwärtsbewegung der zweiten Stange (3) innerhalb der ersten Stange (2) dient,

und daß das dichte Gehäuse (1) an seinem oberen Ende ein Druckentlastungsventil (65) für den in seinem Inneren herrschenden Druck aufweist.

2. Steuervorrichtung nach Anspruch 1, dadurch gekennzeichnet, daß die erste Steuerstange (2) an ihrem unteren Ende eine seitlich expandierbare Kupplungsmuffe (5) trägt, die an ihrer Innenseite Eingriffsansätze (6) aufweist, welche mit in der Außenseite des Befestigungsteiles des ersten Bündels ausgebildeten Ausnehmungen (7) zusammenwirken, wobei ein Mantel (12) zum Verriegeln der Muffe (5) in der Eingriffsstellung des Bündels am Ende der Steuerstange (2) angeordnet ist und die Muffe (5) drehbeweglich und axialbeweglich umgibt, und daß die Steuerstange (3) des zweiten Bündels mit einer an sich bekannten Eingriffseinrichtung, welche eine expandierbare Muffe (20) aufweist, die mit äußeren Ansätzen (21) versehen ist, welche in eine entsprechende Öffnung des Befestigungsteiles des Bündels eingeführt werden, und mit einer zentralen Stange (18) ausgestattet ist, welche an ihrem Ende eine Olive (19) trägt, um die Muffe (20) zu verriegeln.

3. Steuervorrichtung nach Anspruch 2, dadurch gekennzeichnet, daß der Verriegelungsmantel (12) der mit der ersten Steuerstange (2) verbundenen expandierbaren Muffe (5) zwei Schlitze (13) für den Durchtritt von die expandierbare Muffe (5) bildenden flexiblen Lamellen (5a, 5b) in deren Offenstellung und zwei U-förmige Öffnungen (14) für den Eingriff der mit der ersten Steuerstange (2) verbundenen Verriegelungsfinger (10), wobei der Verriegelungsmantel (12) durch eine Feder (15) nach unten gedrückt ist, die zwischen der Steuerstange (2) und dem Verriegelungsmantel (12) eingeschaltet ist.

4. Anwendung der Steuervorrichtung nach einem der Ansprüche 1 bis 3 bei einem Kernreaktor mit verbesserter Leistung, bei welchem ein Teil der Brennelementbündel sowohl mit einem Bündel von Regelstäben als auch mit einem Bündel von Stäben zur Variation des Neutronenspektrums ausgestattet ist.

0 111 435

Fig 1

Fig 1a

**0 111 435**

Fig 2

Fig 2a

Fig 2b